# EUROPEAN PATENT SPECIFICATION

(11) **EP 3 194 164 B1**
(45) Date of publication and mention of the grant of the patent: **08.04.2020**
(21) Application number: 15756580.5
(22) Date of filing: 13.08.2015
(51) Int. Cl.: B32B 15/085, B32B 15/20, B32B 27/08, B32B 27/10, B32B 27/30, B32B 27/32, B32B 29/00, B65D 77/00, B65D 5/00, B32B 7/12

(54) **PACKAGING LAMINATE, METHOD FOR PRODUCING SAME, AND PACKAGING CONTAINER PRODUCED FROM THE PACKAGING LAMINATE**
STRATIFIÉ D'EMBALLAGE, PROCÉDÉ DE PRODUCTION DE CELUI-CI, ET CONTENANT D'EMBALLAGE PRODUIT À PARTIR DU STRATIFIÉ D'EMBALLAGE
VERPACKUNGSLAMINAT, VERFAHREN ZUR HERSTELLUNG DAVON UND AUS DEM VERPACKUNGSLAMINAT HERGESTELLTER VERPACKUNGSBEHÄLTER

(30) Priority: 14.08.2014 SE 1450945
(43) Date of publication of application: 26.07.2017
(73) Proprietor: Tetra Laval Holdings & Finance SA, 1009 Pully (CH)
(72) Inventor: TOFT, Nils, S-224 72 Lund (SE); LASSON, Rolf, S-234 39 Lomma (SE); BALOGH, Joakim, S-224 65 Lund (SE)
(74) Representative: Tetra Pak - Patent Attorneys SE
(86) International application number: PCT/EP2015/068690
(87) International publication number: WO 2016/023993

(56) References cited:
- EP-A1- 1 118 459
- EP-A1- 1 897 910
- WO-A1-2014/024913
- WO-A2-02/28974
- JP-A- 2010 137 880
- US-A1- 2010 120 313

## Description

### Technical field

The present invention relates to a packaging laminate for a packaging container for oxygen-sensitive liquid or semi-liquid food, which packaging laminate comprises a layer of paper or paperboard, and a layer serving as a gas or vapour barrier layer, which layers are bonded to each other by a laminating material, comprising a first adhesive polymer composition in direct contact with the paper or paperboard, the first adhesive polymer composition comprising a polymer material having ethylene monomer units and some monomer units having carboxylic acid functional groups.

The invention also relates to a packaging container for liquid or semi-food, which packaging container has been produced by folding and sealing the packaging laminate.

In addition, the invention relates to a method of manufacturing such a packaging laminate.

### Background of the invention

A known packaging laminate of the type described above generally has a layer of paper or paperboard and outer liquid-tight coatings of polyethylene (PE), preferably low-density polyethylene (LDPE). In order to give the packaging laminate barrier properties against gases, in particular oxygen, the packaging laminate additionally has at least one further layer of a material which provides such barrier properties and which is bonded to the paper or paperboard layer by a lamination layer, preferably low-density polyethylene (LDPE). Examples of materials for a further layer of this kind can be a layer or film containing a polymer with inherent barrier properties, for example a copolymer of ethylene and vinyl alcohol (EVOH) or a polyamide (PA), or a prefabricated film coated with a liquid-film-coated or vacuum-deposited or vapour-deposited layer having corresponding barrier properties mainly against gases but also against flavouring agents and water vapour. A common example of coated prefabricated films of this kind is that of oriented films of polyester, for example polyethylene terephthalate (PET) or polypropylene (PP), with a metallized layer or a layer coated by plasma-assisted vapour deposition. An aluminium foil is generally used which, in addition to having excellent barrier properties against gases, in particular oxygen, also has the advantageous property of allowing the packaging laminate to be heat-sealed by induction sealing, which is a rapid, simple and effective heat-sealing technique.

The known packaging laminate is conventionally produced from a web of paper or paperboard which is unwound from a storage reel, while at the same time a web of aluminium is unwound from a corresponding storage reel. The two unwound webs are brought together with each other and are both guided through the nip between two adjacent rotatable cylinders, while at the same time a laminating material, usually low-density polyethylene (LDPE), is applied between the webs in order to permanently bind the aluminium web to the paper or paperboard web. The paper or paperboard web is thereafter provided on both sides with liquid-tight coatings of polyethylene, normally low-density polyethylene (LDPE), and is then wound up on finished packaging reels for onward transport and handling.

Dimensionally stable packaging containers of the single-use type are produced from the packaging laminate with the aid of highly efficient packaging machines of the type that shape, fill and seal finished packages from a web or from prefabricated blanks of the packaging laminate.

For example, from a web of the packaging laminate, packaging containers are produced by a process in which the web is firstly shaped into a tube by means of both lengthwise edges of the web being joined permanently to each other in an overlap seam by melting together the mutually facing plastic layers of the web. The tube is filled with the food product in question, e.g. milk or juice, and is divided into contiguous pillow-shaped packaging units by repeated pressing-together and heat-sealing of the tube transversely with respect to the longitudinal direction of the tube, below the product level of the tube. The pillow-shaped packaging units are separated from each other, by cuts made in the transverse sealing zones, and are finally given the desired geometric shape, usually a shape like a brick, by means of at least one further forming and heat-sealing operation.

A packaging laminate of the known type permits the production of dimensionally stable packaging containers that are product-compatible and consumer-friendly and hold oxygen-sensitive liquid food, for example milk, juice, wine and cooking oil, but are nonetheless associated with disadvantages in terms of both the environment and also processing technology.

For example, the low-density polyethylene (LDPE) used to bind the aluminium foil to the paper or paperboard layer is a non-polar polymer which in itself lacks natural binding sites for binding to corresponding binding sites on the surface of the aluminium foil. Therefore, in the known method, functional binding sites have to be created synthetically. In practice, this is done by a process in which low-density polyethylene (LDPE) is applied between the paper or paperboard web and the aluminium web by extrusion at a higher temperature (in this case at ca 330°C) than the temperature (ca 300°C) that is normally used for extrusion coating of low-density polyethylene, while at the same time ozone is added in order to initiate an oxidation reaction and form polar groups, including free carboxylic acid groups, via which the low-density polyethylene (LDPE) can bind to active binding sites on the surface of the aluminium foil. An extrusion at elevated temperature (ca 330°C) entails increased consumption of energy and, consequently, an increased emission of environmentally harmful greenhouse gases ("carbon footprint").

An extrusion of low-density polyethylene (LDPE) at elevated temperature (ca 330°C), as in the known method, causes degradation reactions of the polyethylene molecule by chain-breaking and cross-linking reactions. Once they have actually started, these degradation reactions can proceed to such an extent that the desired ability of the polymer to maintain a permanent binding strength between the aluminium foil and the paper or paperboard layer is lost, and the mechanical strength is thereby also lost.

Ozone, which is generally used as an agent for promoting oxidation and adherence, is itself a gas that is harmful to health and to environment, and it has to be handled with the utmost care in order to prevent the gas leaking out. Furthermore, the treatment of the polymer material surface may also lead to degradation reactions and low-molecular degradation products, why it is advantageous if such treatments and chemicals can be avoided in the lamination processes. EP 1 118 459 A1 discloses a packaging laminate having the layer sequence paper/adhesive/AI/PET. In one example, the adhesive is an ethylene-maleic anhydride copolymer with maleic anhydride content of 1.5 wt% (0.4 mol%).

### Description of the invention

There is therefore a need to make available a packaging laminate of the type mentioned at the outset, without the problems and disadvantages of the type associated with the known technique described above.

Furthermore, the ever increasing use of opening arrangements, which are designed to penetrate, tear open, pull- or push-tearing the laminated packaging material, puts increasing demands on packaging laminates for packaging containers for oxygen-sensitive liquid food.

The use of pre-cut holes in the paperboard, which are later laminated over by the various polymer and barrier layers of the laminate, requires close to perfect adhesion between the layers within the laminate membrane area of the pre-cut holes, in order to avoid problems of possible air inclusions, ruptures, leakages problems and penetration of gas molecules into the product. Any occurrence of bad adhesion between the laminated layers, may thus be detrimental to the sterility and integrity of the package, i.e. the ability to resist penetration of gases, micro-organisms and other substances which may harm the packaged food product on the one hand, and the ability to keep tight around the packaged liquid product, not to leak out, on the other hand.

It is therefore an object of the invention to meet these needs.

It is an object of the invention to provide a packaging laminate having improved integrity/adhesion between the laminated layers, such that the laminated layers are well adhered to each other across the entire surfaces of the layers, also within possible regions of pre-cut paperboard holes, in which non-paperboard layers form a laminate membrane, in particular a good permanent functional binding between the gas barrier layer and the paper or paperboard layer of the packaging laminate.

Another object is to provide a packaging laminate for a packaging container for oxygen-sensitive liquid food, of the type produced by folding and heat-sealing of the packaging laminate, which provides good packaging container integrity according to the above and to provide such packaging containers.

A further object is to make available a method for producing the packaging laminate, which method can be carried out without unnecessarily excessive consumption of energy, and without the use of substances that are harmful to health and to the environment, in order to achieve and maintain a permanent functional binding between the gas barrier layer and the paper or paperboard layer of the packaging laminate.

According to one aspect, the invention thus provides a packaging laminate for a packaging container for oxygen-sensitive liquid food, such as milk, juice, wine and cooking oil, which packaging laminate comprises a layer of paper or paperboard, and a layer which serves as gas barrier and is bonded to the paper or paperboard layer by a laminating material.

The packaging laminate thus comprises a layer of paper or paperboard, and a layer of aluminium serving as a gas or vapour barrier layer, which layers are bonded to each other by a laminating material, comprising a central polymer layer which, on one surface, has a first adhesive layer of a first adhesive polymer composition with the ability to bind to the paper or paperboard layer and, on its other surface, has a second adhesive layer of a second adhesive polymer composition with the ability to bind to the layer of aluminium serving as gas barrier, wherein the first adhesive layer on one surface of the central polymer layer is in contact with the paper or paperboard layer, and wherein the second adhesive layer on the other surface of the central polymer layer is in contact with the layer of aluminium serving as gas or vapour barrier, the first adhesive polymer composition comprising ethylene monomer units and from 0,15 to below 1,5 mol%, of monomer units having carboxylic acid functional groups, of the total first adhesive polymer composition, and the second adhesive layer having the same adhesive polymer composition as the first adhesive layer.

According to an embodiment, the amount of monomer units having carboxylic acid functional groups in the laminating material is from 0,15 to 1,3 mol%, such as from 0,3 to 0,7 mol%, such as from 0,15 to 0,4 mol%, of the total first adhesive polymer composition. To get high reliable adhesion to a paperboard surface, relatively high temperatures of the coating polymer melt are required. At higher carboxylic acid group content, the risk for gel-forming due to polymer degradation in the heated melting and extrusion equipment increases, as well as the formation of soot particles and degradation products in the extruded polymer layer. At a too low amount of carboxylic acid groups, there will naturally be fewer free bonding sites towards the adjacent surfaces and too low adhesion as a result.

According to an embodiment of the packaging laminate, the first adhesive polymer composition further comprises a low density polyethylene (LDPE). Adhesive copolymers from ethylene and (meth)acrylic acid monomer units, having a higher carboxylic group content may be further diluted in a blend composition with LDPE, such that the right amount of carboxylic groups may be obtained for optimal bonding and melt processing properties. The composition comprises at least 40 weight percent of the adhesive polymer.

According to a specific embodiment of the packaging laminate, the first adhesive polymer composition comprises an adhesive polymer selected from the group consisting of ethylene-acrylic acid copolymer (EAA) and ethylene-methacrylic acid copolymer (EMAA) and blends thereof. The composition comprises at least 40 weight percent of the EAA and/or EMAA. Suitable such adhesive copolymers are found for example with the tradenames of Primacor, Nucrel or Escor.

According to an embodiment of the packaging laminate, the first adhesive polymer composition comprises a low density polyethylene (LDPE) at an amount of up to 60 wt-%.

The material layer serving as a barrier layer is aluminium. Most commonly, the barrier material is an aluminium foil, but it can also be a metallised polymer film, wherein gas and/or vapour barrier properties are at least partly contributed to the packaging laminate by the metallised layer.

According to an embodiment of the packaging laminate, the material layer serving as a barrier layer is, on its opposite side, which is to form the inside of the packaging laminate in a packaging container, bonded to a heat sealable food product contact layer of polyethylene by an inside adhesive polymer, which is in direct contact with the barrier layer, the inside adhesive polymer consisting of a polymer having ethylene monomer units and monomer units having carboxylic acid functional groups, which amount to from 1,5 mol% and above, preferably from 1,5 mol% to 3,5 mol%, more preferably from 1,5 mol% to 3,3 mol%, of the inside adhesive polymer. According to an embodiment, the inside adhesive polymer is an ethylene acrylic acid copolymer (EAA). The higher levels of carboxylic acid functionality in the adhesive polymer bonding to the aluminium foil on the inside, compared to the adhesive polymer bonding to the paper or paperboard layer, are required in the case of packaging of liquid milk and juice. Especially in fruit and vegetable juices, there are so-called free fatty acids that may migrate from the packaged product into and through the inside heat sealable layers towards the aluminium foil barrier, where they are accumulated to high concentrations and acting detrimentally on the adhesion between the aluminium foil and the adjacent inside polymer layer. A higher carboxylic acid functionality in this adjacent inside adhesive polymer layer delays the deterioration of the adhesion to the aluminium foil further, thus extending the shelf life of the filled juice package. In the case of packaging of milk, the inside heat sealable polyolefin layers need to be extruded at a lower temperature in order to avoid off-taste generation in the filled milk product due to migrating low-molecular degradation products into the milk. By the co-extrusion together with a carboxylic acid functional adhesive to be adjacent to the Alfoil, sufficient adhesion of the inside layers to the Alfoil as well as to the innermost heat sealable polyolefin layer is obtainable, although the extrusion temperature may need to be kept rather low.

According to a further embodiment of the packaging laminate, the heat sealable food product contact layer comprises or consists of a polyethylene selected from the group consisting of LDPE, linear low density polyethylene (LLDPE) and linear low density polyethylene polymerised by a single site catalyst (m-LLDPE), and blends of two or more thereof.

According to a further embodiment, the laminating material comprises a central polymer layer which, on one surface, has a first adhesive layer of a first adhesive polymer with the ability to bind to the paper or paperboard layer and, on its other surface, has a second adhesive layer of a second adhesive polymer with the ability to bind to the layer serving as gas barrier, wherein the first adhesive layer on one surface of the central polymer layer is in contact with the paper or paperboard layer, and wherein the second adhesive layer on the other surface of the central polymer layer is in contact with the layer of aluminium serving as gas or vapour barrier, the first adhesive polymer comprising ethylene monomer units and monomer units having carboxylic acid functional groups, which amount to from 0,15 to below 1,5 mol%, preferably from 0,15 to 1,3 mol%, more preferably from 0,15 to 0,7 mol%, most preferably from 0,15 to 0,4 mol%, of the first adhesive polymer, the second adhesive polymer layer having the same adhesive polymer composition as the first adhesive polymer layer.

According to an embodiment, the first adhesive polymer comprises an adhesive polymer selected from the group consisting of ethylene-acrylic acid copolymer (EAA) and ethylene-methacrylic acid copolymer (EMAA) and blends thereof.

According to a further embodiment, the central polymer layer comprises a non-polar polymer material, such as a polyolefin.

The first and second adhesive layers of the lamination material can be made from adhesive polymers of different layer thicknesses, but they are preferably made from one and the same adhesive polymer with one and the same layer thickness. The first adhesive polymer of the first adhesive layer may be a copolymer having ethylene monomer units and monomer units having carboxylic acid functional groups at an amount of from 0,15 to 1,5 mol%, such as from 0,15 to 1,3 mol%, such as from 0,15 to 0,7 mol%, of the first adhesive polymer.

The second layer of a second adhesive polymer thus has the same composition as the first adhesive polymer. The advantage is not only that a simpler extrusion equipment may be used, by handling only one adhesive polymer melt for supplying the two adhesive layers of the laminate material, but also that gelling problems in the melt extrusion operation of the laminate material layers may be avoided while still achieving good adhesion between all layers concerned.

According to one embodiment of the invention, the central polymer layer in the laminating material comprises a polyethylene. Within the group of polyethylenes, the properties of the central layer can be varied and tailored to achieve various final properties in a packaging laminate.

Examples of linear polymers that can help to improve the mechanical properties of the finished packaging laminate, when they are included in a laminating layer, are so-called linear polymers, for example polyolefins, such as polyethylenes, for example high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts or constrained-geometry catalysts, including so-called metallocene-LLDPE (m-LLDPE) catalysts, and polypropylene (PP). Very low density polyethylene (VLDPE) and ultra low density polyethylene (ULDPE) are examples of subcategories within the category of linear low density polyethylenes. Linear polymers are understood as polymers which have a more linear molecular structure than LDPE, i.e. which have fewer long-chain branches. Depending on the type and quantity of comonomer, these polymers generally have greater durability in several respects. Depending on what is required of the finished packaging laminate as regards various mechanical properties, for example tear resistance, puncture resistance and durability, it is possible, according to the invention, for the laminating material and the adhesive polymer to be combined and varied within the context of suitable processing properties in extrusion coating and extrusion lamination. Mechanical, elastic properties of this kind are achieved with polyethylenes of the types MDPE, LLDPE), very low-density polyethylenes (VLDPE), ultra low-density polyethylenes (ULDPE) and m-LLDPE, while HDPE generally gives, for example, improved barrier properties in respect of water vapour, and somewhat improved barrier properties also against oxygen.

Variations of the laminating material for the desired type of packaging laminate for beverages and liquids are thus found within the group of polyethylenes, i.e. polymers chosen from the group that includes low-density polyethylene (LDPE), high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or with so-called single-site catalysts or constrained-geometry catalysts, including so-called metallocene-LLDPE (m-LLDPE) catalysts, and mixtures of two or more of these polymers. This group thus also includes copolymers of ethylene and other alpha-olefin monomers which of course include, for example, linear low-density polyethylenes (LLDPE), very low-density polyethylenes (VLDPE), ultra low-density polyethylenes (ULDPE), also copolymers of ethylene and propylene in different proportions, for example so-called plastomers or elastomers of the type marketed by Dow under the names "Engage" and "Affinity", and also terpolymers of ethylene, propylene and an alpha-olefin monomer having polyethylene-like properties.

According to one embodiment of the invention, the polymer in the laminating material in the packaging laminate according to the invention comprises a low-density polyethylene (LDPE) which can be produced either by a polymerization reaction in an autoclave reactor or by a polymerization reaction in a tube reactor. A low-density polyethylene (LDPE) which is produced by polymerization in an autoclave can be extruded in a conventional manner without serious edge effects in the form of what is called neck-in, but it has limited draw-down properties, compared to LDPE produced in a tube reactor, i.e. compared to the other abovementioned polyethylene materials it has a higher melt elasticity, with corresponding MFI value, under the same processing conditions. It typically has a broad molecular weight distribution and long-chain branches in its molecular structure.

Neck-in is understood as the drawing-in at the edges of a melt curtain of extruded polymer, which occurs between the outlet of the extrusion die and the first point of contact of the curtain with the running web of material that is to be coated with the polymer. The warm extruded molten film thus shrinks, such that its width shrinks on the way between the die and the nip between the cooling cylinders. At the same time, the edge zones of the melt curtain thicken. In order to overcome this problem, the warm curtain is often extruded wider than the web that is to be coated, in order to reduce costs in respect of uncoated substrate material, which is often more expensive than the extruded polymer. The edge waste that is formed thus consists of only extruded material, which can be cut away and recycled. The width of the edge zones constitutes the measure of the neck-in in millimetres and is usually indicated as the combined uncoated width of both the edges.

The term draw-down refers to the ability of the extruded melt curtain to hold together without breaks or gaps in the curtain as the melt is drawn with high acceleration down the web in the nip from the outlet of the extrusion die. These properties of a polymer melt depend on its balance between viscous and elastic properties and can be summarized by the term "melt elasticity". This balance is a result of a number of polymer characteristics, mainly the molecular weight distribution and long-chain branching.

According to an embodiment, LDPE produced in an autoclave reactor with an MFI of 4 to 10 g/10 min, measured as per ISO1133 at 2.16 kg and 190°C, can be advantageously combined with adhesive layers of adhesive polymer with an MFI value of 4 to 10 g/10 min. According to one embodiment of the invention, LDPE produced in an autoclave reactor with an MFI of 4 to 10 g/10 min, measured as per ISO1133 at 2.16 kg and 190°C, can advantageously be combined with adhesive layers of adhesive polymer with an MFI value of 10 to 20 g/10 min. According to one embodiment, LDPE produced in an autoclave reactor with an MFI of 10 to 20 g/10 min, measured as per ISO1133 at 2.16 kg and 190°C, can advantageously be combined with adhesive layers of adhesive polymer with an MFI value of 4 to 10 g/10 min.

A low-density polyethylene (LDPE) produced by polymerization in a tube reactor generally has a lower melt elasticity and is much more sensitive to negative edge effects, in the form of neck-in during conventional extrusion, than is a low-density polyethylene (LDPE) produced by polymerization in an autoclave reactor, and it therefore cannot be extruded without appreciable neck-in, which results in substantial edge waste from the web and, consequently, increased costs.

A tube-produced LDPE also has long-chain branches, but it lacks the high proportion of molecules of high molecular weight which an autoclave-produced LDPE has and which can be seen as a "tail" or "extra top" at the end of a molecular weight distribution curve for autoclave-produced LDPE. A tube-produced LDPE generally has a lower melt elasticity than an autoclave-produced LDPE.

With the method of co-extruding layers of the laminating material, an LDPE produced in a tube reactor can, despite this, be applied at relatively high extrusion speeds, for example 400 m/min and higher, in part by virtue of its better draw-down properties, even at lower temperatures, for example from 280 to 310, for example from 290 to 300°C. At the same time, the layer in the laminating material with LDPE produced in a tube reactor can be extruded more thinly, in the method according to the invention, than in the case of conventional lamination with only LDPE as laminating material, and the total amount of laminating material can be reduced, sufficient or better adhesion can be achieved, and energy is saved. By virtue of the method according to the invention, an LDPE produced by polymerization in an autoclave reactor can also be extruded at relatively high speed and also at lower temperature, despite its poorer draw-down properties, while at the same time the layers can be extruded more thinly, and the total amount of laminating material is reduced, better adhesion can be achieved, and energy is saved.

By means of the method according to the invention, differences in the behaviour of the two polymer types upon extrusion can be effectively counteracted and even eliminated by a suitable choice of the outer adhesive layers of the laminating material. An adhesive polymer material should be of a type which is intended for extrusion coating or extrusion lamination. At a lower extrusion temperature, in the method according to the invention, it is therefore possible to maintain the necessary adhesion and avoid negative edge effects, while at the same time the extrusion process is more energy-efficient and avoids the use of substances and methods that are harmful to health and to the environment. By co-extruding the central layer of the laminating material with the outer adhesive layers on both sides, a more stable melt curtain of polymer is obtained, and the various properties of the laminating materials in respect of neck-in and draw-down can compensate each other at lower extrusion temperatures, and lamination of material can take place at relatively high speed, while at the same time good or better adhesion can be achieved, and thin layers of the respective polymer layers can be applied without defects, such that the total costs for raw material and laminating steps in the production are maintained or even reduced. Lower extrusion temperatures mean temperatures that are more than 15 degrees lower than the temperature used in conventional extrusion lamination with only LDPE as laminating material, i.e. 325-330°C, for example 280-310°C, for example 290-310°C. The extrusion temperature is measured by an IR meter on the melt curtain immediately below the outlet of the die. Relatively high extrusion or lamination speed means web speeds from ca 400 m/min and upwards, while a lower speed means ca 100-300 m/min. Thin layers mean layers thinner than the thickness of 20 g/m² or thinner, which is normally required in conventional extrusion lamination with only LDPE as laminating material. The central layer of the laminating material according to the invention can have a thickness of from 10 to 14 g/m², while the outer adhesive polymer layers of the laminating material can each have a thickness of from 2 to 5 g/m², for example 3 to 4 g/m².

The method according to the invention is especially advantageous for LDPE polymers that have been produced by polymerization in a tube reactor, in order to overcome the disadvantages thereof in the form of neck-in tendency, while at the same time other general advantages are obtained in the production of the packaging laminate, namely excellent adhesion, lower energy consumption, and advantages in terms of health and the environment.

The packaging laminate according to the invention is in the same way advantageous for comprising linear polymers as laminating material, especially polyolefins with a linear molecular structure, compared to LDPE that has been produced by polymerization in a tube reactor, generally polyethylene polymers, since they have more or less the same processing properties in extrusion coating and their common feature is that they all have low melt elasticity and therefore a high tendency to neck-in at the edges of the melt curtain as compared to conventional autoclave-produced LDPE.

According to one embodiment of the invention, the laminating material of the center layer thus comprises polyethylenes chosen from the group consisting of LDPE produced by polymerization in a tube reactor, high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have a lower melt elasticity with a corresponding MFI, in extrusion coating, as compared to autoclave-produced LDPE, the reason being that they have a narrower molecular weight distribution and/or a lower proportion of long-chain branches.

According to one embodiment of the invention, the laminating material comprises polyethylenes chosen from the group consisting of LDPE produced by polymerization in a tube reactor, medium-density polyethylene (MDPE), linear low-density polyethylene (LLDPE), very low-density polyethylenes (VLDPE), ultra low-density polyethylenes (ULDPE) produced with conventional catalysts, or other catalysts, or with so-called single-site catalysts or constrained-geometry catalysts, including so-called metallocene-LLDPE (m-LLDPE) catalysts, and mixtures of two or more of these polymers. A common feature of all these polymer types is that they have a lower melt elasticity with a corresponding MFI, in extrusion coating, as compared to autoclave-produced LDPE, the reason being that they have a narrower molecular weight distribution and/or a lower proportion of long-chain branches. The linear polymers also provide a laminated packaging material according to the invention with better elastic properties, such as improved tear resistance and puncture resistance, and this results in packaging containers with improved integrity, i.e. improved durability to transport stresses.

According to one embodiment of the invention, the laminating material thus comprises polyethylenes chosen from the group consisting of medium-density polyethylene (MDPE), linear low-density polyethylene (LLDPE), very low-density polyethylenes (VLDPE), ultra low-density polyethylenes (ULDPE) produced with conventional catalysts, other catalysts, or with so-called single-site catalysts or constrained-geometry catalysts, including so-called metallocene-LLDPE (m-LLDPE) catalysts, and mixtures of two or more of these polymers.

Examples of usable polymers for the liquid-tight outer layers of the packaging laminate according to the invention are polyolefins, such as low-density polyethylene (LDPE), linear low-density polyethylene (LLDPE), very low-density polyethylenes (VLDPE), ultra low-density polyethylenes (ULDPE), high-density polyethylene (HDPE) and polypropylene (PP). In cases where the barrier layer is made of aluminium foil, the outer layer on the inside of the packaging laminate, i.e. the side to be directed towards a product packed in the packaging container, is advantageously bonded to the aluminium foil by a layer of an adhesive polymer.

This results in even better adhesion between all the layers of the packaging laminate and in good durability of the filled packaging containers, for example during transport and handling.

As has been mentioned above, a usable adhesive for the packaging laminate according to the invention must from the very outset, and therefore without the need for additional measures, have active binding sites in the form of polar functional groups, according to one embodiment of the invention free carboxylic acid groups, by which the laminating material can effectively and permanently bind on the one hand to the paper or paperboard web and on the other hand to the material serving as gas barrier. The content of polar binding groups must be high enough to achieve adhesion with the aluminium foil and the paperboard layer, but not so high that the adhesive material loses compatibility with the central layer of the laminating material. A further requirement of a well-functioning adhesive polymer is that it can be extruded at a temperature which is high enough to achieve adhesion, but without initiating uncontrolled degradation reactions that impair quality. For Primacor 3540, used in the Examples, the temperature should rather not exceed 290 °C and at any rate not 300 °C.

It is generally much harder to obtain good adhesion between a polymer and the paperboard surface than between the polymer and the surface of an aluminium foil. When extrusion coating an LDPE onto paperboard, various surface activation treatments are necessary in the lamination operation, as well as a high extrusion temperature of 220-225 °C. In some embodiments, the adhesion between the first adhesive composition and the paper or paperboard is so high that it generates fibre tear within the paper or paperboard layer, upon adhesion testing according to ASTMD903-98(2010). In some embodiments, the adhesion between the aluminium barrier layer and the laminating material is higher than 105 N/m, such as higher than 200 N/m.

Examples of adhesives that meet the above requirements are an ethylene-acrylic acid copolymer (EAA) and an ethylene-methacrylic acid copolymer (EMAA), which both include free carboxylic acid groups by which they can bind effectively and permanently to the respective adjacent layer in the packaging laminate. A practical example of the first-mentioned type (EAA) is commercially available under the trade name Primacor from Dow Chemical Company, and a corresponding example of the latter type (EMAA) can be obtained from DuPont under the trade name Nucrel. A further example of a usable adhesive is the one sold by ExxonMobil Chemicals under the trade name Escor. According to an embodiment, it is preferable, for reasons of processing technology, to use the same adhesive polymer in the adhesive layer on one surface of the central polymer layer as in the adhesive layer on the other surface of the central polymer layer, although the amounts of adhesive polymer in the respective adhesive layers can differ from each other. However, according to an embodiment, it is possible to use different adhesive polymers in the two layers, if so desired, in order to achieve particular properties.

According to one embodiment of the invention, the adhesive polymer has an equivalent viscosity to, and therefore a melt flow index (MFI) at the same level as, an LDPE which is used in the central layer of the laminating material, intended for extrusion coating. According to one embodiment of the invention, the adhesive polymer has a lower viscosity than, and therefore a higher melt flow index (MFI) than, an LDPE which is used in the central layer of the laminating material, intended for extrusion coating.

An adhesive layer containing free polar groups in the form of carboxylic acid groups, may be characterised by methods including for example infrared spectroscopy (IR, FTIR). A particular adhesive polymer having a particular monomeric composition, will give rise to a characteristic absorption spectra with peaks representing different molecular groups of the monomers included. In particular free carboxylic groups will give rise to a characteristic peak in the FTIR spectrum that corresponds to stretching vibration of the acid group at between 1710-1780 cm-1. By a calibration curve, the amount or concentration of such groups may be determined.

Materials that have gas barrier properties, in particular against oxygen, and that are usable for the packaging laminate according to the invention may be an aluminium foil or a polymer film which, on one side, has a coating of metal, e.g. vapour-deposited aluminium. An aluminium foil is preferably chosen which, in addition to having excellent barrier properties against gases, in particular oxygen, also allows the packaging laminate to be sealed by induction sealing, which is a rapid, simple and effective heat-sealing technique. Alternatively, sealing can be carried out using an ultrasonic sealing technique, which is also a rapid, simple and effective heat-sealing technique.

In another aspect of the invention, a packaging container is made available for oxygen-sensitive liquid food, for example milk, juice, wine and cooking oil. The packaging container is characterized in that it is produced from the packaging laminate according to the invention by folding and heat-sealing.

For example, the packaging container can be produced from a web of the packaging laminate according to the invention, by a process in which the web is firstly shaped into a tube by means of both lengthwise edges of the web being joined to each other in an overlap seam by melting together the mutually facing plastic layers, after which the tube is filled with the food product in question, e.g. milk, juice, wine or cooking oil, and is divided into contiguous pillow-shaped packaging units by repeated pressing-together and heat-sealing of the tube transversely with respect to the longitudinal direction of the tube, below the product level of the tube, which packaging units are separated from each other and are finally given the desired geometric shape, usually a shape like a brick, by means of at least one further forming and heat-sealing operation.

In an alternative embodiment, the packaging container can be produced from a tubular blank of the packaging laminate according to the invention that is folded flat, by first of all building the blank up to form an open tubular container capsule, of which one end is closed off by means of folding and heat-sealing of prepared integral end panels, which container capsule is filled with the food product in question, e.g. milk, juice, wine or cooking oil, through its open end, which is thereafter closed off by means of at least one further folding and heat-sealing of corresponding prepared integral end panels.

In yet another aspect of the invention, a method of manufacturing the packaging laminate of the invention, wherein the layer of paper or paperboard is bonded to the layer serving as a gas or vapour barrier layer by means of melt extrusion lamination, such that a web of a the material with barrier properties is brought together with a web of the paper or paperboard, and the webs brought together are guided through a pressure nip between two adjacent rotatable cylinders, while at the same time a laminating material of molten polymer is applied into the nip between the webs in order to permanently bind these to each other when the molten polymer layer is solidified. In the case when the laminating material comprises several polymer materials, they are separately extruded but brought together in the extrusion die to form a co-extruded polymer melt curtain, i.e. the paper or paperboard layer and the barrier layer are laminated to each other by melt co-extrusion lamination with the laminating material.

According to one embodiment of the method of the invention, the two liquid-tight and heat-sealable outer layers are applied by extrusion coating to both sides of the web by means of conventional and already installed extrusion equipment. In another embodiment, at least one of the two liquid-tight and heat-sealable outer layers of polymer, in the packaging laminate, is applied by film lamination, in which a prefabricated film of the polymer is laminated onto one surface of the web with the aid of a suitable adhesive that is applied between the web and the film.

### Brief description of the figures

The invention will be described in more detail with reference to the attached drawings, in which:
Figure 1 is a schematic cross-sectional view of a packaging laminate according to the invention;
Figure 2 schematically illustrates the production of the packaging laminate from Figure 1 by the method according to the invention;
Figure 2A is an enlarged view of the circled area A in Figure 2 when the packaging laminate of Fig. 1 is produced;
Figure 3 schematically depicts a method for forming, filling and sealing packaging containers from a web on a reel of packaging material;
Figure 4 is a schematic perspective view of a packaging container of the type Tetra Brik Aseptic, made from the packaging laminate according to the invention;
Figure 5 is a schematic perspective view of a packaging container of the type Tetra Fino Aseptic, made from the packaging laminate according to the invention; and
Figure 6 is a schematic perspective view of a packaging container of the gable-top type, a so-called Tetra Rex package, made from the packaging laminate according to the invention.

### Detailed description of the figures

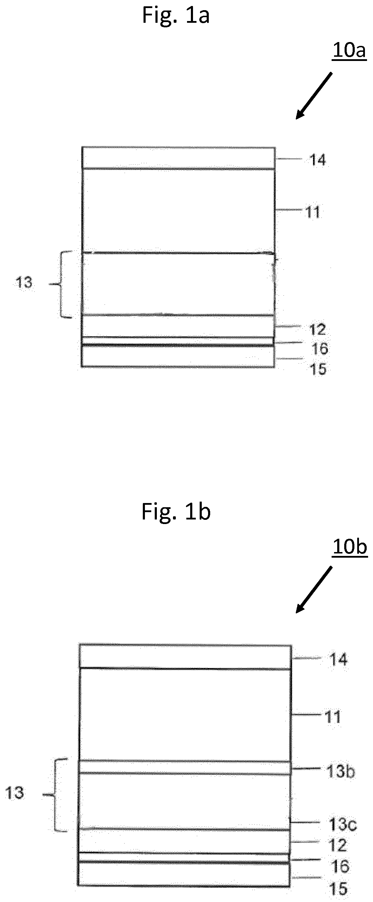

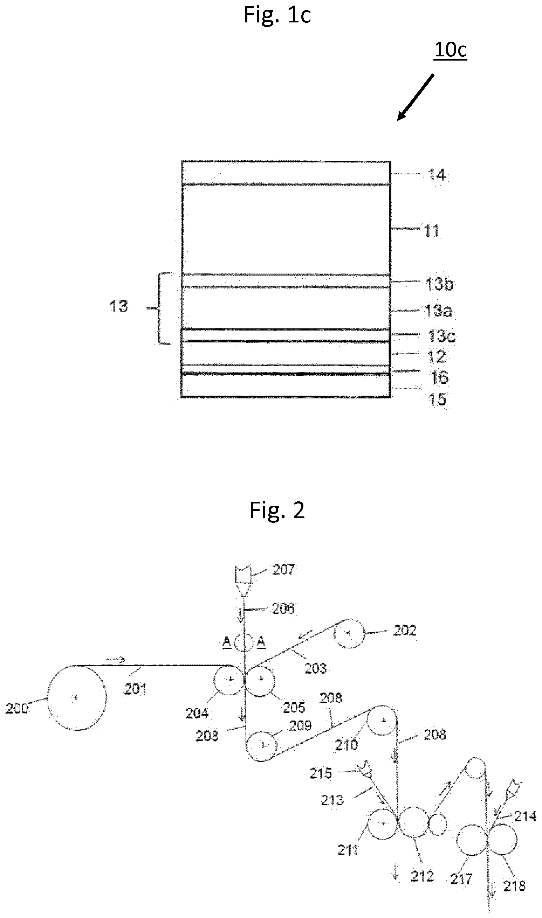

Figure 1 shows schematically a cross section through an embodiment of a general packaging laminate of the invention. The packaging laminate, designated by the general reference sign 10, has a layer 11 of paper or paperboard, and a layer 12 which serves as gas or vapour barrier and is bonded to the paper or paperboard layer 11 by a laminating material 13. In the embodiment shown, the packaging laminate 10 also has an outer liquid-tight coating 14, 15 on both sides of the paper or paperboard layer 11, the heat sealable layer 15 on the inside of the packaging laminate being aimed to be in direct contact with the filled food product on the inside of a packaging container. The heat sealable product contact layer 15 is optionally bonded to the barrier layer 12 by means of an inside adhesive polymer 16, the inside adhesive polymer preferably being a polymer having ethylene monomer units and some monomer units having carboxylic acid functionality, which amounts to from 1,4 to 3,0 mol% of the inside adhesive polymer.

The laminating material layer 13 has a central layer 13a, of which one surface has a layer 13b of an adhesive with the ability to bind to the paper or paperboard layer 11, and of which the other surface has a layer 13c of an adhesive with the ability to bind to the layer 12 serving as gas barrier. As is shown in Figure 1, the adhesive layer 13b on one side of the central layer 13a is in contact with the paper or paperboard layer 11, while the adhesive layer 13c on the other side of the central layer 13a is in contact with the layer 12 serving as gas barrier.

In one illustrative embodiment according to the invention, the central layer 13a can be a polymer layer of low-density polyethylene (LDPE) that can be produced by a polymerization reaction in either an autoclave reactor or a tube reactor. As has already been mentioned, a polymer layer of low-density polyethylene (LDPE) is preferably a low-density polyethylene (LDPE) that is produced in the latter type of reactor, i.e. a tube reactor, since a low-density polyethylene (LDPE) of this kind permits extrusion at a lower extrusion temperature and at a higher web speed (draw-down) than a low-density polyethylene (LDPE) that is produced in an autoclave reactor.

In another illustrative embodiment, the central layer 13a can be a polymer layer made of a linear polymer, which helps give the finished packaging laminate 10c improved mechanical properties when these are desired. Examples of linear polymers that can be used are high-density polyethylene (HDPE), or linear low-density polyethylene (LLDPE), very low-density polyethylenes (VLDPE), ultra low-density polyethylenes (ULDPE) produced with conventional catalysts or so-called single-site catalysts.

As has already been mentioned, a well-functioning adhesive polymer for the adhesive layers 13b and 13c has active binding sites (free carboxylic acid groups) to permit effective and permanent binding to the paper or paperboard layer 11 and to the layer 12 serving as gas barrier. A further requirement of a well-functioning adhesive polymer in the packaging laminate 10 is that it is able to be applied at a sufficiently low temperature in order to avoid loss of quality as a result of degradation reactions upon contact with the warmer polymer in the central layer 13a of the lamination layer 13. Practical examples of adhesive polymers with active binding sites (acid groups) are ethylene-acrylic acid copolymer (EAA) and ethylene-methacrylic acid copolymer (EMAA) and blends thereof.

The adhesive layers 13b and 13c of the lamination layer 13 can be made from adhesive polymers of different layer thicknesses, but they are preferably made from one and the same adhesive polymer with one and the same layer thickness. The first adhesive polymer of the first adhesive layer 13b is a copolymer having ethylene monomer units and monomer units having carboxylic acid functional groups at an amount of from 0,15 to 1,3 mol%, more preferably from 0,15 to 0,7 mol%, of the first adhesive polymer. The first adhesive layer 13b consists of an adhesive polymer, which is a copolymer comprising ethylene monomer units and monomer units having carboxylic acid functional groups at an amount of from 0,15 to 1,3 mol%, of the adhesive polymer. The second adhesive polymer layer (13c) has the same adhesive polymer composition as the first adhesive layer.

According to the invention, the material in the layer 12 serving as gas barrier can be an aluminium foil which, in addition to its excellent barrier properties against gases, in particular oxygen, also makes the packaging laminate 10 heat-sealable by means of induction sealing, which is a rapid and also effective sealing technique.

The outer liquid-tight coatings 14 and 15 of the packaging laminate 10 can be coatings of a polyolefin, such as polyethylene (PE) and polypropylene (PP). Examples of a usable polyethylene (PE) are low-density polyethylene (LDPE), linear low-density polyethylene (LLDPE) produced with conventional catalysts or so-called single-site catalysts, and high-density polyethylene (HDPE). In the present case, an outer liquid-tight coating, which is intended to be directed towards a food product packed in a packaging container, can be bonded to the barrier layer by a layer of an adhesive polymer of the same type as, or different from, the adhesive layers included in the laminating material 13. For the best performance of the packaging laminate, the inside adhesive polymer is, as stated above, a polymer having ethylene monomer units and some monomer units having carboxylic acid functionality, which amounts to from 1,4 to 3,0 mol% of the inside adhesive polymer.

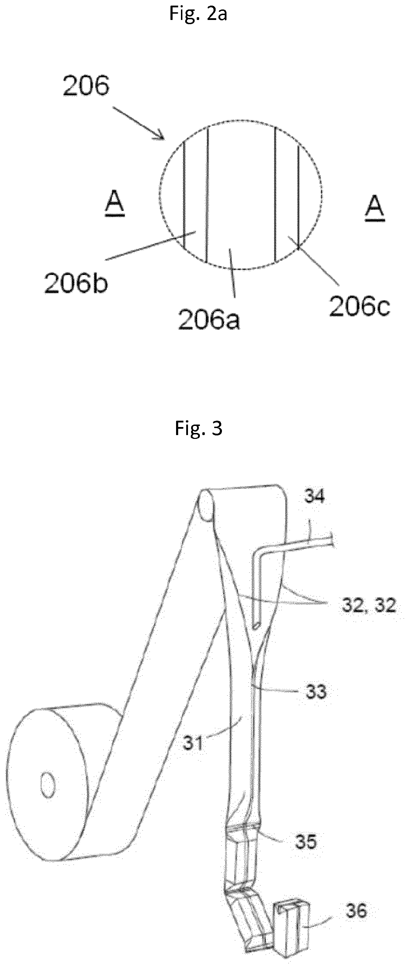

The packaging laminate 10 in Figure 1, can be produced in the manner shown schematically in Figure 2. A web 201 of paper or paperboard is unwound from a storage reel 200, and a corresponding web 203 of a material with barrier properties against gases, in particular oxygen, is unwound from a storage reel 202. The two webs 201 and 203 are brought together with each other and are guided together through a nip between two adjacent rotatable cylinders 204 and 205, while at the same time a laminating material 206 is applied between the webs to laminate them to each other and thereby form a durable laminated web 208.

In the example shown, the laminating material 13, 206 is applied by extrusion or co-extrusion by means of an extruder 207 arranged above the nip and will be described in more detail below.

The laminated web 208 is then conveyed via guide rollers 209 and 210 towards and through a nip between two further adjacent rotatable cylinders 211 and 212, while at the same time one surface of the web 208 is provided with an outer liquid-tight coating 213 of extrusion-coated polymer. In a subsequent nip between another two adjacent rotatable cylinders 217 and 218, the other surface of the web 208 is provided with an outer liquid-tight coating 214 of extruded polymer. These two extrusion-coating steps can be carried out in reverse order and also, wholly or partly, before the lamination step in the nip between the cylinders 204 and 205.

In the example shown, an outer liquid-tight coating 213 is applied to one surface of the web by extrusion with the aid of an extruder 215, and an outer liquid-tight coating 214 is applied to the other surface of the web 208 by extrusion with the aid of a corresponding extruder 216 arranged near the web 208.

Following further mechanical or other machining operations on the web thus coated, the latter is finally wound up for onward transport and further handling in which it is formed into dimensionally stable packaging containers for oxygen-sensitive liquid food, e.g. milk, juice, wine and cooking oil, as will be described hereinbelow.

Thus, the laminating material 206 with which the web 203 of the material with barrier properties against gases, in particular oxygen, is laminated to the paper or paperboard web 201 is a three-layer structure as in Fig 1 and shown on an enlarged scale in Figure 2A. This three-layer structure has a central layer 206a of a polymer which, on one surface, has a first outer layer 206b of an adhesive polymer with the ability to bind to paper or paperboard and, on its other surface, has a second outer layer 206c of an adhesive polymer with the ability to bind to said material with barrier properties against gases, in particular oxygen. According to the invention, the three-layer structure serving as laminating material is preferably extruded by co-extrusion, in such a way that the outer adhesive layer 206b is brought into direct contact with the paper or paperboard web 201, while at the same time the outer adhesive layer 206c is brought into direct contact with the web 203 of the material with barrier properties against gases, in particular oxygen. There is no need for a surface treatment, such as ozone treatment or corona, or any further addition of chemicals to the lamination operation.

The polymer for the central layer 206a of the laminating material 206 can be chosen more or less freely and is thus not limited to any particular type of polymer. An example of a usable polymer for the central layer 206a of the laminating material 206 is a low-density polyethylene (LDPE) of the type which is produced by a polymerization reaction in an autoclave reactor, or a low-density polyethylene (LDPE) of the type which is produced by a polymerization reaction in a tube reactor. By virtue of the method according to the invention, low-density polyethylene (LDPE) produced in an autoclave reactor can, despite its poorer draw-down properties, also be extruded at a relatively high speed and even at lower temperatures, while at the same time the layers can be extruded more thinly, the total amount of laminating material is reduced, better adhesion can be achieved, and energy is saved.

Low-density polyethylene (LDPE) produced in a tube reactor permits co-extrusion coating at a relatively high production speed, for example ca. 400 m/min and over, by virtue of its good draw-down properties, compared with an LDPE produced in an autoclave reactor. It also has the added advantage that it can be co-extruded and coated at a lower extrusion temperature, for example 280 to 310°C, for example 290 to 300°C, than LDPE produced in an autoclave reactor and therefore requires less energy than the latter. In turn, extrusion of low-density polyethylene (LDPE) at a lower temperature such as this reduces the risk of the quality being impaired by degradation reactions, as has already been mentioned. Furthermore, no surface treatment such as ozone treatment is needed.

Other examples of usable polymers for the central layer 206a of the laminating material 206 are linear polymers, which have the advantage of helping to improve the mechanical properties of the finished packaging laminate. Examples of linear polymers that can be used in the method according to the invention are high-density polyethylene (HDPE), medium-density polyethylene (MDPE), linear low-density polyethylene (LLDPE), very low-density polyethylenes (VLDPE), ultra low-density polyethylenes (ULDPE) produced with conventional catalysts or so-called single-site catalysts, or constrained-geometry catalysts, including so-called metallocene catalysts.

The requirement to be met by usable adhesive polymers for both outer layers 206b and 206c of the laminating material 206 is of course that they must permit effective and permanent binding to the respective web 201 and 203. A further requirement is that they must also be able to be extruded at a sufficiently low temperature in order to avoid the risk of inadvertently increasing the temperature of the polymer layer 20 of the laminating material 206 such that it exceeds the critical temperature at which uncontrolled degradation reactions may be initiated that impair quality. Examples of adhesives that meet both of these requirements are ones which, in their natural state, have active acid groups on their surface, for example ethylene-acrylic acid copolymer (EAA) and ethylene-methacrylic acid copolymer (EMAA). Such an adhesive is commercially available under the trade name Primacor from Dow Chemical Company, and another such adhesive can be obtained from DuPont under the trade name Nucrel. A further example is obtainable from ExxonMobil Chemicals under the trade name Escor.

Other examples of adhesive polymers having free, active carboxylic acid groups, suitable for some aspects of the present invention, may be maleic-anhydride functionalised polyolefins, in particular maleic-anhydride functionalised polyethylenes, which also provide polyolefin-based polymers having free carboxylic acid functionality.

Although adhesives that are different from each other can be used in the outer layers 206b and 206c of the laminating material 206, it is advantageous, for reasons of processing technology, to use adhesive of the same composition and of the same quantity in each of the outer layers 206b and 206c.

Materials that have gas barrier properties and that are usable in the method according to the invention may be an aluminium foil or a polymer film which, on one or both of its sides, has a coating of metal, e.g. vapour-deposited or vacuum-metallized aluminium. An aluminium foil is preferably used which, in addition to having excellent barrier properties against gases, also allows the packaging laminate to be sealed by so-called induction sealing, which is a rapid, simple and effective heat-sealing technique.

Examples of usable polymers for the liquid-tight, heat-sealable outer layers 213 and 214 applied to the web 208 in the method according to the invention are polyolefins, such as low-density polyethylene (LDPE), linear low-density polyethylene (LLDPE), high-density polyethylene (HDPE) and polypropylene (PP).

From a web of the packaging laminate 10 in Figure 1 for example, it is possible, to produce dimensionally stable packaging containers of a disposable type for oxygen-sensitive liquid foods, such as milk, juice, wine and cooking oil, by folding and heat-sealing in a manner known per se. Such packaging containers are nowadays produced with the aid of modern packaging machines of the type in which finished packages are shaped, filled and sealed.

One way in which packaging containers made of the packaging laminate 10 in Figure 1 can be shaped, filled and sealed is illustrated in Figure 3. The so-called single-use packages are produced from a web by being shaped into a tube 31, in which the longitudinal edges 32, 32' of the web are joined to each other in an overlap seam 33 by melting together the mutually facing surfaces of the plastic layers 14 and 15. The tube is filled 34 with the food product in question and is divided into contiguous pillow-shaped packaging units 36 by repeated pressing-together and heat-sealing of the tube transversely with respect to the longitudinal direction 35 of the tube, below the product level of the tube, and the packaging units are separated from each other and finally given the desired geometric shape, usually a parallelepipedal shape like a brick, by means of at least one further folding and heat-sealing step.

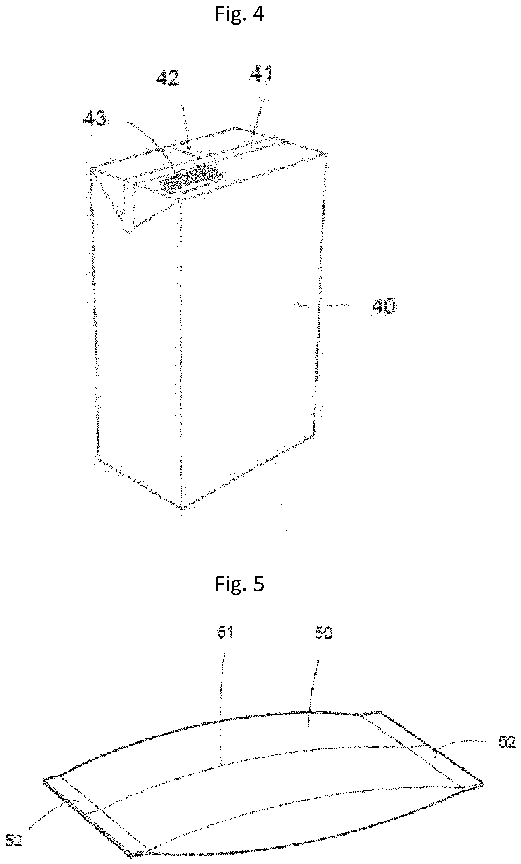

A well-known example of a single-use package of this type is the commercial package sold under the name Tetra Brik *aseptic,* which is shown in Figure 4. In addition to the characteristic brick-like outer shape, a unique feature of this commercial type of packaging is that it is produced more or less completely by folding and heat-sealing 41, 42 of the web-shaped packaging laminate, without the use of extra packaging parts such as separate tops and/or bottoms. Such packaging containers 40 can also be provided with a suitable opening arrangement 43, for example a screw cap which, when opened, penetrates and removes the packaging material and permits emptying of the packaged product. For this purpose, the laminated packaging laminate can have perforations in the paperboard layer that has been laminated in between the polymers and barrier layers of the laminate. Alternatively, a hole is punched in the laminated packaging material immediately before the filling process, after which the hole is provided with a tape or pull-tab, on both sides of the packaging material. After the packaging container has been filled and sealed, an opening arrangement in the form of a hinge or screw cap can be applied on top of the covered hole. Alternatively, an opening arrangement is applied which is cast onto a punched hole directly during the filling process. It is not necessary to provide the packaging container with an opening device, it can also be torn open by means of a tear-perforation, or by cutting.

Alternatively, packaging containers can be produced as above but have, as their final shape, the pillow shape that is obtained directly after the packaging units have been separated from each other and that is not therefore further shaped by folding. Such a package is generally produced using a thinner paperboard material and therefore entails greater demands on adhesion and integrity of the packaging material with regard to the lamination layers and also to the mechanical strength characteristics, in particular the elastic characteristics, of the polymer layers. An example of one such package is shown in Figure 5.

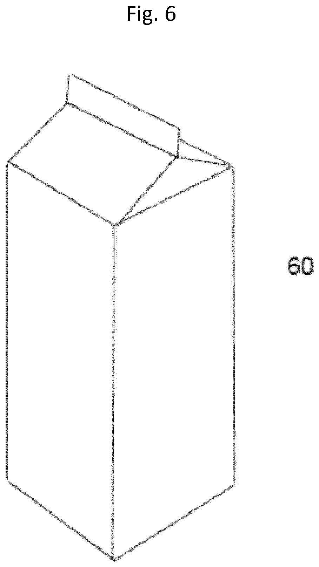

Packaging containers for oxygen-sensitive liquid food, for example juice, can also be produced from sheet-like blanks or prefabricated blanks of the packaging laminate 10 in Figure 1. From a tubular blank of the packaging laminate 10 that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is shown in Figure 6 and is a so-called gable-top package 60. There are also packages of this type which have a moulded top and/or screw cap made of plastic.

### Comparative Example 1

Packaging laminate 10 was produced with the composition indicated in the following table:

| Laminate layer | Reference sign in figures | Coating quantity, g/m² (reference example 1) | Coating quantity, g/m² |
|---|---|---|---|
| | | | (Comparative Example 1) |
| Low-density polyethylene (LDPE) | 14 | 12 | 12 |
| Paperboard | 11 | | |
| Ethylene-acrylic acid copolymer (EAA) | 13b | --- | 3 |
| | | | (Primacor 3540 Dow; with about 3,2 mol-% carboxylic acid groups) |
| Low-density polyethylene (LDPE) | 13a | 20 | 10 |
| | | (Novex 19N730) | (Novex 19N730) |
| | | (Autoclave-LDPE) | |
| Ethylene-acrylic acid copolymer (EAA) | 13c | --- | 3 |
| | | | (Primacor 3540 Dow) |
| Aluminium foil | 12 | 6.3 µm | 6.3 µm |
| Ethylene-acrylic acid copolymer (EAA) | (not shown) | 6 | 6 |
| Blend of LDPE and m-LLDPE (weight ratio 30:70) | 15 | 19 | 19 |

Packaging laminate 10 was produced by co-extrusion of the material layers 13a-13c as a three-layer structure, with the material layers included in the sequence 13b/13a/13c. This co-extrusion could generally be carried out at an extrusion speed of 200 m/min and at an extrusion temperature of below 310 °C and without the use of ozone or other extra chemicals to achieve and maintain a permanent binding of the aluminium foil 12, serving as gas barrier, to the paper or paperboard layer 11 of the packaging laminate. The paperboard material used throughout was CLC/C material with a flexural stiffness of 260 mN. The three layers were able to be co-extruded at the temperatures 290 -310 - 290 °C and at a web speed of 650 m/min, with excellent (non-measurable, above the detection limit) adhesion to the paperboard layer or barrier layer.

The known packaging laminate of the prior art, constituting a further reference example 1, was produced in a similar manner by extrusion of only the material layer 13a, of LDPE only, but in this case an extrusion temperature as high as 325 °C was needed, together with addition of ozone, to achieve an acceptable binding between the aluminium foil 12 and the paper or paperboard layer 11. A packaging laminate produced by the method according to Comparative Example 1 thus has considerable environmental and health-related advantages over a corresponding packaging laminate produced in the known way, i.e. without use of adhesive chemicals in direct contact with the paper or paperboard layer and with the layer serving as gas barrier, in this case the aluminium foil. The adhesion obtained, in the example according to Comparative Example 1, between the laminating material and the aluminium foil was improved to such an extent that the layers could no longer be separated along the interfaces between these two materials, i.e. the adherence was higher than the detection limit in the peel test, which is about 200 N/m. By way of comparison, satisfactory adhesion between the laminating material and the aluminium foil was also obtained in the reference example, by means of a higher extrusion temperature and also surface treatment with ozone, but the adhesion was not so great that the layers could not be separated (mean value 105 N/m). After shaping into packaging containers, satisfactory packaging integrity was obtained, i.e. durability and tightness both to liquid and oxygen, with the packaging laminates from both Comparative Example 1 and the reference example.

In a peel test, strips of packaging laminate measuring 15 mm in width are cut, and the two layers between which the adherence is to be measured are separated/delaminated. The two flaps of the delaminated strips are clamped in a tension testing machine, where the strips are further delaminated under controlled conditions at a delamination angle of 90°. The force during the delamination is measured with a load cell, and the peel test value is indicated by the unit N/m. The method is a variation of ASTM D903 - 98 (2010) "Standard Test Method for Peel or Stripping Strength of Adhesive Bonds", with the difference that the specimen width is 15 mm instead of 25 mm and the delamination angle is 90° instead of 180°.

Moreover, with the purpose of testing the ability of the packaging laminate to withstand impact or percussion, like when a packaging container falls down on the floor from a certain height, observations made by an internal test method surprisingly showed a significant improvement, up to more than 30 %, of the durability of the packaging laminate of Comparative Example 1 compared to the packaging laminate of the reference example 1.

### Comparative Example 2

Comparative Example 1 was repeated with the difference that Primacor™ 3460 (having about 3,6-4,0 mol-% of carboxlic acid groups) was used as adhesive polymer in both outer layers 13b and 13c of the laminating material. Conventional autoclave-LDPE Novex 19N 730 was used as central layer. The three-layers were co-extruded at the temperature setting 290-290-290 °C and were able to be coated at a web speed of 500 m/min.

In both Comparative Examples 1 and 2, there was gel formation occurring at difficult circumstances in the heated melting and extrusion equipment, due to degradation induced by the carboxylic acid groups of the adhesive polymers. By optimising the extrusion lamination conditions, this is possible to prevent to a sufficient extent by thorough surveillance of the extrusion process. The window of operation, within which a good lamination result may be obtained is however narrow, and needs careful attention by operators and control systems. Lowering the extrusion temperature further in order to avoid gel formation, was found not to be an option. At 280 °C there was no, or insufficient adhesion of the adhesive polymer layer to the paperboard (no fibre tear).

### Example 3

Comparative Example 1 was repeated with the difference that Novex M21N (having a carboxylic acid group (methacrylic acid) content of about 0,4 mol-%) was used as adhesive polymer in both outer layers 13b and 13c of the laminating material. Conventional autoclave-LDPE Novex 19N 730 was used as central layer. Thus, the three-layers were co-extruded at the temperature setting 290-310-290 °C and were evenly coated at a web speed of 500 m/min, without using ozone treatment, and found to have lower adhesion to the adjacent paperboard layer as well as to the Aluminium foil. There was separation between the paperboard layer and the adhesive polymer layer, and very little tear within the fibrous paperboard layer, so-called "fibre-tear". The adhesion was judged as "just satisfactory" at about 150 N/m between the laminating material and the aluminium foil, i.e. better than in the reference Example but not as good as with the higher acid content adhesive polymer of Comparative Example 1. There was no gel formation, regardless of (provoking) difficult circumstances in the melting and extrusion equipment, such as longer than usual holding times for the molten polymer, due to stops in the lamination operation or due to an occasional peak in the heating temperature of the equipment.

### Example 4

Comparative Example 1 was repeated with the difference that Novex M21N (having a carboxylic acid group (methacrylic acid) content of about 0,4 mol-%) was used as adhesive polymer in both outer layers 13b and 13c of the laminating material. Conventional autoclave-LDPE Novex 19N 730 was used as central layer. Thus, the three-layers were co-extruded at the temperature setting 310-310-310 °C and were evenly coated at a web speed of 500 m/min, without using ozone treatment.

The results from Example 4 were very positive, regarding adhesion to paperboard as well as to aluminium foil and regarding gel formation. Improved adhesion to the aluminium foil (above 200 N/m, i.e. inseparable, as in Comparative Example 1) was seen, and in particular the adhesion result to the paperboard was improved. There was no separation between the paperboard layer and the adhesive polymer layer, but tear within the fibrous paperboard layer, so-called "Fibre-tear". There was no trace of gel formation observed, neither in the adhesive layers nor in the extrusion equipment under the same conditions as in Example 3.

Thus, when lowering the amount of carboxylic acid monomer unit content in the adhesive polymer, it was surprisingly found that improved and more robust adhesion results were obtained, and in particular that the operating window could be widened such that higher extrusion temperatures in the adhesive polymer layers may be used, without risk for gel formation and particles in the adhesive polymer layer or in the extrusion equipment. Still, high extrusion temperatures as needed when extruding LDPE alone (Example 2) are not needed for achieving good adhesion.

Accordingly, the use of an adhesive ethylene co-polymer having a lower carboxylic acid content, makes it possible to manufacture improved packaging laminates, without gel particles in the adhesive polymer applied, but still with excellent adhesion between the laminating material and the paperboard surface, and without need for surface treatments such as ozone treatment. Similar packaging laminates having a higher acid content in the laminating material will either have too low adhesion to paperboard, or a high risk for gel degradation particles present in the adhesive layers. At continuous and industrial production of packaging laminates, this is an evident and notable improvement.

## Claims

1. Packaging laminate for a packaging container for oxygen-sensitive liquid food, which packaging laminate comprises a layer (11) of paper or paperboard, and a material layer (12) of aluminium serving as a gas or vapour barrier layer, which layers (11 and 12) are bonded to each other by a laminating material (13), comprising a central polymer layer (13a) which, on one surface, has a first adhesive layer (13b) of a first adhesive polymer composition with the ability to bind to the paper or paperboard layer (11) and, on its other surface, has a second adhesive layer (13c) of a second adhesive polymer composition with the ability to bind to the material layer (12) serving as gas barrier, wherein the first adhesive layer (13b) on one surface of the central polymer layer (13a) is in contact with the paper or paperboard layer (11), and wherein the second adhesive layer (13c) on the other surface of the central polymer layer (13a) is in contact with the layer (12) of aluminium serving as gas or vapour barrier, the first adhesive polymer composition comprising ethylene monomer units and from 0,15 to below 1,5 mol%, of monomer units having carboxylic acid functional groups, of the total first adhesive polymer composition, and the second adhesive polymer layer (13c) having the same adhesive polymer composition as the first adhesive layer (13b).

2. Packaging laminate according to claim 1, wherein the first adhesive polymer composition comprises ethylene monomer units and from 0,15 to 1,3 mol%, more preferably from 0,15 to 0,7 mol%, most preferably from 0,15 to 0,4 mol%, of monomer units having carboxylic acid functional groups, of the total first adhesive polymer composition.

3. Packaging laminate according to any one of Claims 1-2, wherein the first adhesive polymer composition comprises a low density polyethylene (LDPE) at an amount of up to 60 wt-%.

4. Packaging laminate according to any one of the preceding Claims, wherein the first adhesive polymer or polymer composition comprises an adhesive polymer selected from the group consisting of ethylene-acrylic acid copolymer (EAA) and ethylene-methacrylic acid copolymer (EMAA) and blends thereof.

5. Packaging laminate according to any one of the preceding Claims, further having a heat sealable food product contact layer (15) comprising a polyethylene selected from the group consisting of LDPE, linear low density polyethylene (LLDPE) and linear low density polyethylene polymerised by a single site catalyst (m-LLDPE), and blends of two or more thereof.

6. Packaging laminate according to any one of the preceding Claims, wherein the central layer of the laminating material (13a) has a thickness of from 10 to 14 g/m², and the first and second adhesive polymer layers (13b, 13c) of the laminating material each have a thickness of from 2 to 5 g/m², such as from 3 to 4 g/m².

7. Packaging laminate according to any one of the preceding Claims, wherein the material layer serving as a barrier layer (12), on its opposite side, which is to form the inside of the packaging laminate in a packaging container, is bonded to a heat sealable food product contact layer (15) of polyethylene by an inside adhesive polymer layer (16), which is in direct contact with the barrier layer (12), the inside adhesive polymer layer consisting of a polymer having ethylene monomer units and monomer units having carboxylic acid functional groups, which amount to from 1,5 mol% and above, preferably from 1,5 mol% to 3,5 mol%, more preferably from 1,5 mol% to 3,3 mol%, of the inside adhesive polymer.

8. Packaging laminate according to any one of the preceding Claims, wherein the central polymer layer (13a) comprises a polyolefin, such as a polyethylene.

9. Packaging laminate according to any one of the preceding Claims, wherein the central polymer layer (13a) comprises a polyethylene chosen from a group consisting of low-density polyethylene (LDPE), linear low-density polyethylene (LLDPE), very low-density polyethylenes (VLDPE), ultra low-density polyethylenes (ULDPE), linear low-density polyethylene which has been produced with a so-called single-site catalyst, metallocene catalyst or so-called constrained-geometry catalyst (m-LLDPE), medium-density polyethylene (MDPE) and high-density polyethylene (HDPE).

10. Packaging laminate according to any one of the preceding Claims, wherein the adhesion between the first adhesive composition and the paper or paperboard is so high that it generates fibre tear within the paper or paperboard layer, upon adhesion testing according to ASTMD903-98(2010).

11. Packaging laminate according to any one of the preceding Claims, wherein the adhesion between the aluminium barrier layer and the laminating material (13) is higher than 105 N/m, such as higher than 200 N/m.

12. Packaging container for oxygen-sensitive liquid food, e.g. milk, juice, wine, cooking oil, etc., produced from the packaging laminate (10) according to any of Claims 1-11.

13. Method of producing the packaging laminate according to any one of claims 1-11, wherein the layer (11) of paper or paperboard is laminated to the material layer (12) of aluminium serving as a gas or vapour barrier layer, by melt (co-)extrusion lamination with the laminating material (13b,13a,13c).

14. Method according to claim 13, wherein the melt co-extrusion lamination is done without any surface treatment, such as ozone treatment.

## Patentansprüche

1. Verpackungslaminat für einen Verpackungsbehälter für sauerstoffempfindliche flüssige Lebensmittel, wobei das Verpackungslaminat eine Schicht (11) aus Papier oder Karton und eine Materialschicht (12) aus Aluminium, die als Gas- oder Dampfsperrschicht dient, umfasst, wobei die Schichten (11 und 12) durch ein Laminiermaterial (13) aneinander gebunden sind, das eine zentrale Polymerschicht (13a) umfasst, die auf einer Oberfläche eine erste Haftschicht (13b) aus einer ersten Haftpolymerzusammensetzung mit der Fähigkeit zum Binden an die Papier- oder Kartonschicht (11) und auf ihrer anderen Oberfläche eine zweite Haftschicht (13c) aus einer zweiten Haftpolymerzusammensetzung mit der Fähigkeit zum Binden an die Materialschicht (12), die als Gassperre dient, aufweist, wobei die erste Haftschicht (13b) an einer Oberfläche der zentralen Polymerschicht (13a) mit der Papier- oder Kartonschicht (11) in Kontakt steht und wobei die zweite Haftschicht (13c) an der anderen Oberfläche der zentralen Polymerschicht (13a) mit der Schicht (12) aus Aluminium, die als Gas- oder Dampfsperrschicht dient, in Kontakt steht, wobei die erste Haftpolymerzusammensetzung Ethylen-Monomereinheiten und von 0,15 bis unter 1,5 mol-%, bezogen auf die gesamte erste Haftpolymerzusammensetzung, Monomereinheiten mit Carbonsäure-funktionellen Gruppen umfasst und die zweite Haftpolymerschicht (13c) die gleiche Haftpolymerzusammensetzung wie die erste Haftschicht (13b) aufweist.

2. Verpackungslaminat gemäß Anspruch 1, wobei die erste Haftpolymerzusammensetzung Ethylen-Monomereinheiten und von 0,15 bis 1,3 mol-%, bevorzugter von 0,15 bis 0,7 mol-%, höchst bevorzugt von 0,15 bis 0,4 mol-%, bezogen auf die gesamte erste Haftpolymerzusammensetzung, Monomereinheiten mit Carbonsäure-funktionellen Gruppen umfasst.

3. Verpackungslaminat gemäß einem der Ansprüche 1-2, wobei die erste Haftpolymerzusammensetzung ein Polyethylen mit niedriger Dichte (LDPE) in einer Menge von bis zu 60 Gew.-% umfasst.

4. Verpackungslaminat gemäß einem der vorstehenden Ansprüche, wobei das/die erste Haftpolymer oder Polymerzusammensetzung ein Haftpolymer ausgewählt aus der Gruppe bestehend aus Ethylen-AcrylsäureCopolymer (EAA) und Ethylen-Methacrylsäure-Copolymer (EMAA) und Gemischen davon umfasst.

5. Verpackungslaminat gemäß einem der vorstehenden Ansprüche, das ferner eine heißsiegelfähige Lebensmittelprodukt-Kontaktschicht (15) aufweist, die ein Polyethylen ausgewählt aus der Gruppe bestehend aus LDPE, linearem Polyethylen mit niedriger Dichte (LLDPE) und linearem Polyethylen mit niedriger Dichte, das mit einem Single-Site-Katalysator polymerisiert ist (m-LLDPE), und Gemischen von zwei oder mehr davon umfasst.

6. Verpackungslaminat gemäß einem der vorstehenden Ansprüche, wobei die zentrale Schicht des Laminiermaterials (13a) eine Dicke von 10 bis 14 g/m² aufweist und die erste und die zweite Haftpolymerschicht (13b, 13c) des Laminiermaterials jeweils eine Dicke von 2 bis 5 g/m², wie z. B. von 3 bis 4 g/m², aufweisen.

7. Verpackungslaminat gemäß einem der vorstehenden Ansprüche, wobei die Materialschicht, die als Sperrschicht (12) dient, an ihrer gegenüberliegenden Seite, die die Innenseite des Verpackungslaminats in einem Verpackungsbehälter bilden soll, durch eine innere Haftpolymerschicht (16), die in direktem Kontakt mit der Sperrschicht (12) steht, an eine heißsiegelfähige Lebensmittelprodukt-Kontaktschicht (15) gebunden ist, wobei die innere Haftpolymerschicht aus einem Polymer mit Ethylen-Monomereinheiten und Monomereinheiten mit Carbonsäure-funktionellen Gruppen, deren Menge 1,5 mol-% und darüber, vorzugsweise von 1,5 mol-% bis 3,5 mol-%, bevorzugter von 1,5 mol-% bis 3,3 mol-%, des inneren Haftpolymers beträgt, besteht.

8. Verpackungslaminat gemäß einem der vorstehenden Ansprüche, wobei die zentrale Polymerschicht (13a) ein Polyolefin, wie z. B. ein Polyethylen, umfasst.

9. Verpackungslaminat gemäß einem der vorstehenden Ansprüche, wobei die zentrale Polymerschicht (13a) ein Polyethylen ausgewählt aus der Gruppe bestehend aus Polyethylen mit niedriger Dichte (LDPE), linearem Polyethylen mit niedriger Dichte (LLDPE), Polyethylenen mit sehr niedriger Dichte (VLDPE), Polyethylenen mit ultraniedriger Dichte (ULDPE), linearem Polyethylen mit niedriger Dichte, das mit einem so genannten Single-Site-Katalysator, einem Metallocen-Katalysator oder einem so genannten Katalysator mit gehinderter Geometrie hergestellt worden ist (m-LLDPE), Polyethylen mit mittlerer Dichte (MDPE) und Polyethylen mit hoher Dichte (HDPE) umfasst.

10. Verpackungslaminat gemäß einem der vorstehenden Ansprüche, wobei die Haftung zwischen der ersten Haftzusammensetzung und dem Papier oder Karton so hoch ist, dass sie bei Haftprüfung gemäß ASTM D903-98(2010) zu Faserreißen innerhalb der Papier- oder Kartonschicht führt.

11. Verpackungslaminat gemäß einem der vorstehenden Ansprüche, wobei die Haftung zwischen der Aluminium-Sperrschicht und dem Laminiermaterial (13) höher als 105 N/m ist, wie z. B. höher als 200 N/m.

12. Verpackungsbehälter für sauerstoffempfindliche flüssige Lebensmittel, z. B. Milch, Saft, Wein, Speiseöl usw., hergestellt aus dem Verpackungslaminat (10) gemäß einem der Ansprüche 1-11.

13. Verfahren zur Herstellung des Verpackungslaminats gemäß einem der Ansprüche 1-11, wobei die Schicht (11) aus Papier oder Karton durch Schmelz(co)extrusionslamination mit dem Laminiermaterial (13b, 13a, 13c) an die Materialschicht (12) aus Aluminium, die als Gas- oder Dampfsperrschicht dient, laminiert wird.

14. Verfahren gemäß Anspruch 13, wobei die Schmelzcoextrusionslamination ohne Oberflächenbehandlung, wie z. B. Ozonbehandlung, durchgeführt wird.

## Revendications

1. Stratifié d'emballage pour un récipient d'emballage pour un aliment liquide sensible à l'oxygène, lequel stratifié d'emballage comprend une couche (11) de papier ou de carton, et une couche de matière (12) en aluminium servant de couche barrière aux gaz ou à la vapeur, lesquelles couches (11 et 12) sont liées l'une à l'autre par un matériau de stratification (13), comprenant une couche polymère centrale (13a) qui, sur une surface, a une première couche adhésive (13b) d'une première composition polymère adhésive avec la capacité de se lier à la couche de papier ou de carton (11) et, sur son autre surface, a une deuxième couche adhésive (13c) d'une deuxième composition polymère adhésive avec la capacité de se lier à la couche de matière (12) servant de barrière aux gaz, dans lequel la première couche adhésive (13a) sur une surface de la couche polymère centrale (13a) est en contact avec la couche de papier ou de carton (11), et dans lequel la deuxième couche adhésive (13c) sur l'autre surface de la couche polymère centrale (13a) est en contact avec la couche (12) d'aluminium servant de barrière aux gaz ou à la vapeur, la première composition polymère adhésive comprenant des motifs monomères d'éthylène et de 0,15 à moins de 1,5 % en moles de motifs monomères ayant des groupes fonctionnels acides carboxyliques, rapporté à la totalité de la première composition polymère adhésive, et la deuxième couche polymère adhésive (13c) ayant la même composition polymère adhésive que la première couche adhésive (13b).

2. Stratifié d'emballage selon la revendication 1, dans lequel la première composition polymère adhésive comprend des motifs monomères d'éthylène et de 0,15 à 1,3 % en moles, mieux encore de 0,15 à 0,7 % en moles, idéalement de 0,15 à 0,4 % en moles, de motifs monomères ayant des groupes fonctionnels acides carboxyliques, rapporté à la totalité de la première composition polymère adhésive.

3. Stratifié d'emballage selon l'une quelconque des revendications 1 et 2, dans lequel la première composition polymère adhésive comprend un polyéthylène basse densité (LDPE) dans une quantité allant jusqu'à 60 % en poids.

4. Stratifié d'emballage selon l'une quelconque des revendications précédentes, dans lequel le premier polymère adhésif ou la première composition polymère adhésive comprend un polymère adhésif choisi dans le groupe constitué par un copolymère éthylène-acide acrylique (EAA) et un copolymère éthylène-acide méthacrylique (EMAA), et les mélanges de ceux-ci.

5. Stratifié d'emballage selon l'une quelconque des revendications précédentes, ayant en outre une couche de contact de produit alimentaire thermoscellable (15) comprenant un polyéthylène choisi dans le groupe constitué par le LDPE, le polyéthylène basse densité linéaire (LLDPE) et le polyéthylène basse densité linéaire polymérisé avec un catalyseur monosite (m-LLDPE), et les mélanges d'au moins deux d'entre eux.

6. Stratifié d'emballage selon l'une quelconque des revendications précédentes, dans lequel la couche centrale du matériau de stratification (13a) a une épaisseur de 10 à 14 g/m², et les première et deuxième couches polymères adhésives (13b, 13c) du matériau de stratification ont chacune une épaisseur de 2 à 5 g/m², comme de 3 à 4 g/m².

7. Stratifié d'emballage selon l'une quelconque des revendications précédentes, dans lequel la couche de matériau servant de couche barrière (12), sur son côté opposé qui est destiné à former l'intérieur du stratifié d'emballage dans un récipient d'emballage, est liée à une couche de contact de produit alimentaire thermoscellable (15) de polyéthylène par une couche polymère adhésive intérieure (16), qui est en contact direct avec la couche barrière (12), la couche polymère adhésive intérieure consistant en un polymère ayant des motifs monomères d'éthylène et des motifs monomères ayant des groupes fonctionnels acides carboxyliques, qui représentent 1,5 % en moles et plus, de préférence de 1,5 % en moles à 3,5 % en moles, mieux encore de 1,5 % en moles à 3,3 % en moles, du polymère adhésif intérieur.

8. Stratifié d'emballage selon l'une quelconque des revendications précédentes, dans lequel la couche polymère centrale (13a) comprend une polyoléfine, telle qu'un polyéthylène.

9. Stratifié d'emballage selon l'une quelconque des revendications précédentes, dans lequel la couche polymère centrale (13a) comprend un polyéthylène choisi dans un groupe constitué par le polyéthylène basse densité (LDPE), le polyéthylène basse densité linéaire (LLDPE), les polyéthylènes très basse densité (VLDPE), les polyéthylènes ultrabasse densité (ULDPE), le polyéthylène basse densité linéaire qui a été produit avec un catalyseur dit monosite, un catalyseur métallocène ou un catalyseur dit à géométrie contrainte (m-LLDPE), le polyéthylène moyenne densité (MDPE) et le polyéthylène haute densité (HDPE).

10. Stratifié d'emballage selon l'une quelconque des revendications précédentes, dans lequel l'adhérence entre la première composition adhésive et le papier ou le carton est si élevée qu'elle génère une déchirure de fibres à l'intérieur de la couche de papier ou de carton, lors d'un essai d'adhérence conformément à la méthode ASTM D903-98 (2010).

11. Stratifié d'emballage selon l'une quelconque des revendications précédentes, dans lequel l'adhérence entre la couche barrière en aluminium et le matériau de stratification (13) est supérieure à 105 N/m, comme supérieure à 200 N/m.

12. Récipient d'emballage pour un aliment liquide sensible à l'oxygène, par ex. du lait, du jus, du vin, de l'huile de cuisson, etc., produit à partir du stratifié d'emballage (10) selon l'une quelconque des revendications 1 à 11.

13. Procédé de production du stratifié d'emballage selon l'une quelconque des revendications 1 à 11, dans lequel la couche (11) de papier ou de carton est stratifiée avec la couche de matière (12) en aluminium servant de couche barrière aux gaz ou à la vapeur, par stratification par (co)extrusion à l'état fondu avec le matériau de stratification (13b, 13a, 13c).

14. Procédé selon la revendication 13, dans lequel la stratification par coextrusion à l'état fondu est réalisée sans aucun traitement de surface, tel qu'un traitement à l'ozone.
